# FASCICULE DE BREVET EUROPEEN

(11) **EP 1 102 694 B1**
(45) Date de publication et mention de la délivrance du brevet: **14.06.2006**
(21) Numéro de dépôt: 00936996.8
(22) Date de dépôt: 31.05.2000
(51) Int. Cl.: B60T 11/16

(54) **DISPOSITIF SIMPLIFIE DE COMMANDE HYDRAULIQUE D'UN EMBRAYAGE, NOTAMMENT POUR VEHICULE AUTOMOBILE**
VEREINFACHTE, HYDRAULISCHE KUPPLUNGSSTEUERVORRICHTUNG, INSBESONDERE FÜR KRAFTFAHRZEUGE
SIMPLIFIED HYDRAULIC CONTROL DEVICE FOR A CLUTCH, ESPECIALLY FOR AN AUTOMOBILE

(30) Priorité: 04.06.1999 FR 9907112
(43) Date de publication de la demande: 30.05.2001
(73) Titulaire: VALEO EMBRAYAGES s.a.s., 80009 Amiens Cedex 1 (FR)
(72) Inventeur: ANGIONE, Pasquale, F-75019 Paris (FR); MOLLIER, Christophe, F-95220 Herblay (FR)
(74) Mandataire: Lemaire, Marc
(86) Numéro de dépôt international: PCT/FR2000/001520
(87) Numéro de publication internationale: WO 2000/074989

(56) Documents cités:
- DE-A- 3 817 206
- DE-A- 19 523 217
- FR-A- 2 790 294

## Description

L'invention concerne un dispositif de commande hydraulique d'un embrayage, notamment pour véhicule automobile, comportant au moins un cylindre émetteur ou récepteur muni d'un piston.

L'invention concerne plus particulièrement un dispositif de commande hydraulique du type décrit dans la demande de brevet français N° 9902426, N° de publication FR 2 790 294, d'un embrayage de véhicule automobile dans lequel le corps de cylindre comporte, agencées axialement consécutivement d'avant en arrière, au moins une pièce avant borgne, qui comporte ledit fond, et une pièce centrale, qui porte ledit au moins un joint d'étanchéité, qui sont fixées entre elles de manière étanche, et du type dans lequel ledit alésage interne comporte deux tronçons avant et arrière, sensiblement coaxiaux et concentriques, de guidage en coulissement axial du piston.

Dans ce document, le corps de cylindre comporte trois parties, respectivement avant, centrale et arrière, qui sont réalisées par moulage, notamment en matière plastique, et les deux tronçons de guidage en coulissement axial du piston dans l'alésage interne du corps de cylindre sont formés, par moulage de précision, dans la pièce avant et dans la pièce arrière respectivement.

Outre les coûts de fabrication qui résultent de la fabrication des pièces avant et arrière dont la précision doit être importante pour la réalisation des tronçons de guidage en coulissement axial du piston, cette conception est aussi complexe et coûteuse dans la mesure où le montage et la fixation des deux pièces d'extrémité avant et arrière sur la pièce centrale doivent aussi être effectués avec une grande précision de manière à assurer les coaxialité et la concentricité des deux tronçons avant et arrière de guidage en coulissement axial du piston.

Afin de remédier à ces inconvénients, et notamment afin de réduire encore davantage les coûts de fabrication et d'assemblage en grande série, l'invention propose un dispositif de commande du type mentionné ci-dessus, caractérisé en ce que les deux tronçons avant et arrière de guidage en coulissement du piston appartiennent à la pièce centrale du corps de cylindre.

Selon d'autres caractéristiques de l'invention :
- le tronçon arrière de guidage est formé directement dans la pièce centrale du corps de cylindre, et le tronçon avant de guidage est formé dans une bague centrale interne de guidage rapportée dans la pièce centrale ;
- la pièce centrale et la bague de guidage comportent des moyens de positionnement et de centrage de la bague par rapport à la pièce centrale pour assurer la coaxialité et la concentricité des deux tronçons avant et arrière de guidage ;
- les moyens de positionnement et de centrage de la bague par rapport à la pièce centrale comportent une portée cylindrique de centrage et une face transversale d'orientation radiale de positionnement axial appartenant à la bague de centrage et qui coopèrent avec une portée cylindrique complémentaire de centrage et une face transversale d'orientation radiale de positionnement axial appartenant à la pièce centrale ;
- la bague de centrage est rapportée dans la pièce centrale par introduction axiale d'avant en arrière ;
- la portée cylindrique de centrage de la bague de centrage est une portée convexe, et la face transversale d'orientation radiale de positionnement axial appartenant à la bague de centrage est orientée axialement vers l'arrière ;
- la pièce centrale comporte un alésage interne étagé qui comprend au moins un tronçon arrière de plus petit diamètre constituant ledit tronçon arrière de guidage en coulissement du piston, et au moins un tronçon avant dont la surface interne constitue la portée cylindrique concave de centrage appartenant à la pièce centrale ;
- ledit au moins un joint d'étanchéité est interposé axialement entre une face transversale d'orientation radiale appartenant à la pièce centrale et une face transversale, d'orientation radiale, d'extrémité arrière de la bague de centrage ;
- ledit au moins un joint d'étanchéité est monté dans un tronçon intermédiaire de l'alésage étagé qui est délimité axialement par rapport audit tronçon arrière de plus petit diamètre par un épaulement qui constitue ladite face transversale d'orientation radiale appartenant à la pièce centrale ;
- le dispositif comporte deux joints d'étanchéité avant et arrière qui sont interposés axialement entre ladite face transversale arrière d'orientation radiale appartenant à la pièce centrale et ladite face transversale d'extrémité avant de la bague de guidage avec interposition d'une entretoise entre les deux joints d'étanchéité ;
- le corps de cylindre comporte une pièce arrière, ouverte axialement vers l'arrière, qui est fixée à l'arrière de la pièce centrale ;
- la pièce arrière est réalisée venue de matière en une seule pièce avec la pièce centrale ;
- la pièce arrière est fixée sur la partie arrière de la pièce centrale par emboîtement élastique ;
- la pièce centrale est réalisée par moulage en matière plastique ;
- la bague de guidage est réalisée par moulage en matière plastique ;
- les pièces avant et centrale sont fixées entre elles de manière étanche par soudage avec apport indirect de chaleur ;
- la bague de centrage et la pièce centrale sont fixées entre elles par soudage avec apport indirect de chaleur ;
- la pièce centrale du corps de cylindre est conformée en une plaque transversale de fixation du dispositif de commande ;
- l'extrémité arrière du corps de cylindre comporte au moins une butée destinée à coopérer avec une extrémité arrière du piston pour limiter le déplacement axial du piston vers l'arrière ;
- le piston comporte une chemise périphérique de piston en métal qui est solidaire axialement du piston et qui coulisse axialement dans l'alésage interne du corps de cylindre.

D'autres caractéristiques et avantages de l'invention apparaîtront à la lecture de la description détaillée qui suit pour la compréhension de laquelle on se reportera aux dessins annexés dans lesquels :
- la figure 1 est une vue en section axiale longitudinale d'un premier mode de réalisation d'un cylindre émetteur réalisé conformément aux enseignements principe l'invention et sur laquelle le piston est représenté dans une position reculée ;
- la figure 2 est une vue éclatée en section axiale longitudinale des composants du cylindre émetteur représenté à la figure 1, à l'exception du ressort et du piston ;
- la figure 3 est une vue de détail à grande échelle qui illustre l'alésage interne étagé de la pièce centrale du corps de cylindre ;
- la figure 4 est une vue qui illustre une première variante de réalisation du corps de cylindre selon l'invention selon laquelle la pièce centrale et la pièce extrémité arrière sont réalisées venues de matière par moulage en une seule pièce ;
- la figure 5 est une vue de détail illustrant une variante de réalisation des moyens de fixation étanche par soudage de la pièce extrémité axiale avant sur la pièce centrale ;
- la figure 6 est une vue similaire à celle de la figure 5 qui illustre une autre variante des moyens de fixation étanche ; et
- la figure 7 est une vue de détail à échelle réduite qui illustre une variante de conception des moyens de butée axiale vers l'arrière pour le piston.

Dans la description qui va suivre, les éléments identiques, similaires ou analogues seront désignés par les mêmes signes de référence.

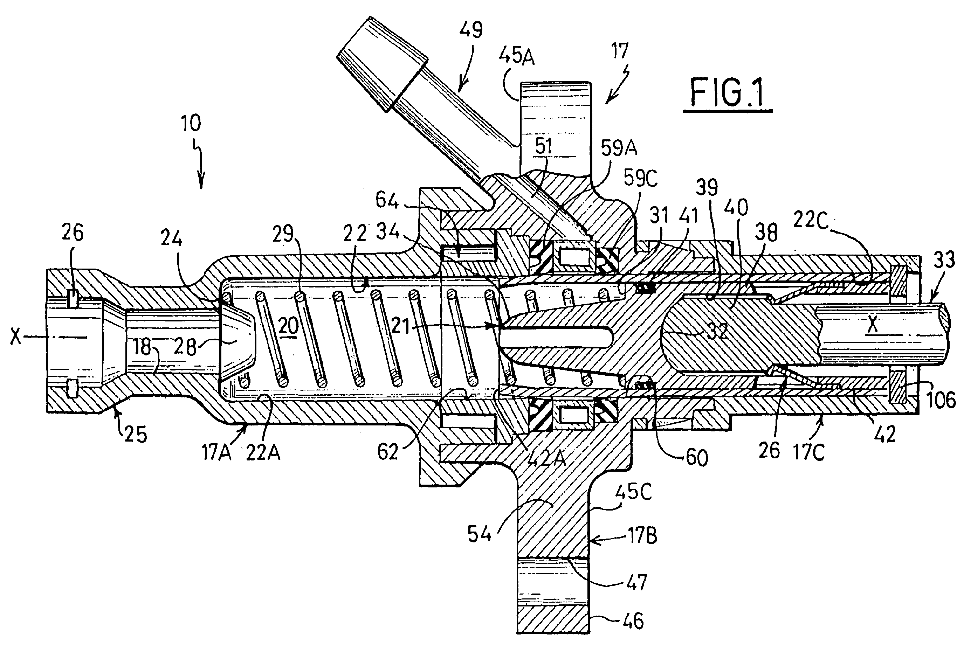

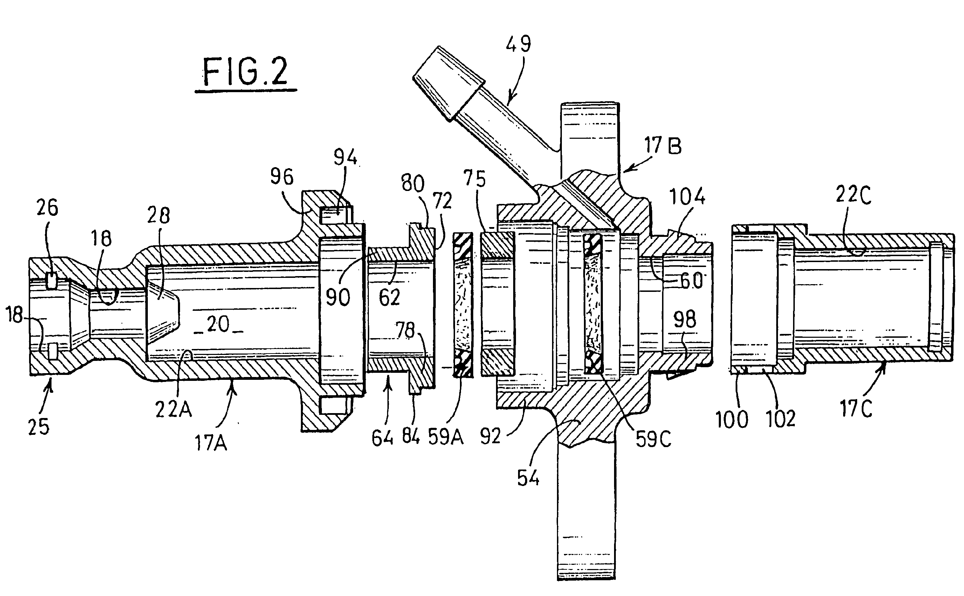

Sur les figures 1 et 2, on a représenté un cylindre de commande sous la forme d'un émetteur d'un dispositif de commande d'un embrayage de véhicule automobile.

Un tel dispositif (non représenté) comporte un cylindre émetteur relié par une conduite à un cylindre récepteur de structure similaire au cylindre émetteur.

Chaque cylindre récepteur ou émetteur comporte un piston mobile axialement à l'intérieur d'un corps de cylindre pour délimiter une chambre hydraulique de volume variable. Un orifice de raccordement, sur lequel se branche la conduite, débouche dans la chambre hydraulique.

Le cylindre émetteur comporte une tige de piston reliée par exemple à une pédale d'embrayage sur laquelle agit le conducteur ou un actionneur dont la mise en route est réalisée selon des programmes prédéterminés.

Le piston du cylindre émetteur est destiné à expulser un fluide, tel que de l'huile, contenu dans la chambre hydraulique en direction de la canalisation ou conduite qui relie le cylindre émetteur au cylindre récepteur.

Lorsque l'embrayage est engagé, le volume de la chambre hydraulique du cylindre émetteur est maximum tandis que le volume de la chambre de commande du cylindre récepteur est minimum.

Lors de l'opération de débrayage, le volume de la chambre hydraulique du cylindre émetteur diminue, tandis que le volume de la chambre de commande du cylindre récepteur augmente.

Le piston du cylindre récepteur agit alors sur une tige agissant, par exemple, sur la fourchette de débrayage actionnant la butée de débrayage, que comporte l'embrayage à friction.

Le piston du cylindre récepteur agit alors sur une tige agissant directement sur la butée dans le cas ou ladite butée est du type butée hydraulique.

Chaque cylindre émetteur et récepteur comporte un ressort agissant entre le piston et le fond du corps du cylindre.

Ce ressort peut être supprimé de la commande hydraulique lorsque la pédale comporte déjà elle même un tel dispositif à ressort.

Lorsque le conducteur relâche son action sur la pédale de débrayage ou lorsque l'actionneur revient à sa position initiale d'embrayage, le ressort de rappel du cylindre émetteur se détend pour ramener le piston à sa position initiale tandis que le ressort de rappel du cylindre émetteur est comprimé par le ressort d'embrayage, tel qu'un diaphragme, qui ramène ainsi le piston du cylindre récepteur à sa position initiale.

Sur les figures, le cylindre émetteur 10 est représenté en position de livraison et il comporte un corps de cylindre 17 doté d'un orifice d'entrée 18, susceptible d'être obturé par un bouchon non représenté. C'est par l'intermédiaire de cet orifice d'entrée que la conduite ou canalisation (non représentée), reliant le cylindre récepteur (non représenté) au cylindre émetteur 10, débouche dans la chambre hydraulique 20 du cylindre émetteur.

La chambre 20 est à volume variable et elle est délimitée par le corps 17 et le piston 21 monté mobile axialement à l'intérieur du corps du cylindre 17.

Le corps de cylindre 17 a une forme générale tubulaire et, il est ici constitué de trois pièces distinctes réalisées séparément par moulage en matériaux plastiques qui sont disposées axialement d'avant en arrière, c'est-à-dire de la gauche vers la droite en considérant les figures, et parmi lesquelles on distingue une pièce avant 17A comportant l'orifice 18 son extrémité axiale avant, une pièce centrale ou intermédiaire 17B et une pièce arrière 17C.

Ce corps de cylindre 17 en trois pièces 17A, 17B et 17C comporte un alésage interne 22 de forme générale borgne et d'axe X-X, correspondant à l'axe de symétrie générale du corps de cylindre 17, avec à l'avant un fond 24 d'orientation transversale, dans lequel débouche l'orifice d'entrée 18 appartenant à un raccord 25 permettant de brancher la conduite mentionnée précédemment, par exemple par brochage, le raccord 25 présentant à cet effet intérieurement des passages 26 pour le passage d'une épingle permettant de raccorder la conduite au cylindre émetteur. En variante, le raccord peut être du type à vis.

Le corps de cylindre 17 est globalement ouvert à l'arrière, c'est-à-dire que sa pièce arrière 17C est elle-même ouverte vers l'arrière.

Chacune des deux pièces d'extrémité axiale, c'est-à-dire la pièce avant 17A et la pièce arrière 17C, se présente sous la forme générale d'une pièce tubulaire de conception globalement simple et facile à réaliser par moulage en matériau plastique.

L'alésage interne 22 comporte une portion avant 22A de diamètre constant formée dans la pièce avant 17A, une portion centrale étagée formée dans la pièce centrale 17B et une portion arrière 22C de diamètre constant formée dans la pièce arrière 17C.

Le piston 21 est susceptible de coulisser dans le corps de cylindre 17, plus précisément dans l'alésage interne 22 de celui-ci, d'arrière en avant en partant de la position reculée de débrayage représentée à la figure 1 vers une position avancée d'embrayage (non représentée).

Une saillie 28, de forme générale tronconique, est réalisée venue de moulage avec le fond transversal 24 et elle s'étend axialement vers l'arrière dans l'alésage 22 pour constituer un centreur pour un ressort 29 de rappel qui est ici un ressort hélicoïdal intervenant entre le corps de cylindre 17 et le piston 21, plus précisément entre le fond transversal 24 et l'avant du piston 21.

Bien entendu, l'orifice 18 traverse le fond 24 et débouche latéralement par rapport à la saillie 28 venue de matière par moulage avec le fond 24.

Le corps du piston 21 est une pièce moulée en matière plastique de forme générale tubulaire et il présente, à sa partie avant, une paroi transversale 30 dont la face transversale avant 31 délimite axialement vers l'arrière la chambre hydraulique 20 et dont une face arrière 32 coopère avec la tête d'une tige de piston 33.

A partir de sa face transversale avant 30, le corps du piston 21 se prolonge axialement vers l'avant par une cheminée 34, qui présente extérieurement un profil tronconique.

Le ressort hélicoïdal de rappel 29 est monté autour de la cheminée 34 dont la base sert de centreur au ressort de rappel 29 dont l'extrémité axiale arrière prend appui sur la face avant 31 de la paroi transversale 30 du piston 21.

Le ressort 29 intervient donc axialement entre le fond 24 et la face avant 31.

La face transversale d'extrémité axiale arrière 36 de la saillie 28 peut constituer une butée avec laquelle est susceptible de coopérer la face transversale d'extrémité axiale avant 37 de la cheminée 34.

Plus précisément, en position avancée, le piston 21 vient en contact par la face avant de la cheminée 34 avec la face 36 de la saillie 28, le corps de cylindre 17 présentant ainsi une butée 28 limitant le déplacement axial vers l'avant du piston 21.

A partir de la paroi transversale 30, le corps tubulaire du piston en matière plastique 21 se prolonge axialement vers l'arrière par une douille 38 comportant un alésage 39 dont le fond avant est délimité par la face arrière 32 de la paroi transversale 30 du piston 21.

Le fond 32 de l'alésage 39 est globalement en forme hémisphérique pour réception de la tête complémentaire 40 formée à l'extrémité axiale avant de la tige de piston 33.

La tête 40, et donc la tige de piston 33, est retenue axialement à l'intérieur de l'alésage 39, et donc par rapport au piston 21, par un élément déformable élastiquement 26 qui ne sera pas décrit ici plus en détail.

La tige 33 est ainsi montée rotulante dans le piston 21, et plus précisément par rapport au fond 32 de la douille 38.

Le piston 21 porte à sa périphérie externe cylindrique un joint statique 41 d'étanchéité de piston qui est ici un joint torique monté dans une gorge radiale intérieure formée dans la périphérie externe cylindrique au droit de la paroi transversale 30. D'autres formes de joints statiques d'étanchéité sont envisageables.

Le joint statique 41 est prévu pour coopérer avec la surface périphérique interne cylindrique d'une chemise de piston 42 qui est ici métallique.

La chemise de piston 42 est un élément tubulaire qui entoure le piston 21 qui est reçu à l'intérieur de la chemise 42.

La chemise de piston 42 est par exemple à base d'aluminium annodisé ou en acier traité. La chemise de piston 42 s'étend vers l'avant en saillie axiale par rapport à la cheminée 34 de telle manière que, en position avancée non représentée, la cheminée 34 est en contact avec la saillie 28, tandis que le bord transversal d'extrémité avant 42A est à distance axiale du fond transversal 24 en vis-à-vis. Les dimensions de la chemise de piston 42 sont telles que la cheminée 34 et le ressort de rappel 29 sont reçus radialement avec jeu à l'intérieur de la chemise de piston 42.

La chemise de piston 42 est en contact intime à sa périphérie interne cylindrique avec la périphérie externe cylindrique du piston 21 et avec la périphérie externe du joint statique d'étanchéité 41.

La chemise de piston 42 est solidaire axialement du piston 21 et ceci d'une part par un effet de serrage radial entre le piston 21 et la chemise du piston 42 avec coopération du joint statique d'étanchéité 41.

D'autres moyens de liaison axiale et en rotation du piston 21 à la chemise de piston 42 peuvent être envisagés sans sortir du cadre de l'invention.

Dans tous les cas, il est ainsi constitué un sous-ensemble unitaire piston 21-chemise de piston 42 formant un équipage mobile axialement dans l'alésage interne 22 du corps de cylindre 17, la chemise de piston 42 et le piston 21 étant des pièces concentriques et coaxiales d'axe X-X.

Le corps de cylindre est destiné à être fixé sur une partie fixe du véhicule et appartient donc à la partie globalement fixe du cylindre émetteur 10, tandis que le piston 21 avec sa tige de piston 33 appartient à la partie mobile du cylindre émetteur.

A cet effet, la partie centrale 17B du corps de cylindre 17 est réalisée sous la forme d'une plaque intermédiaire disposée axialement entre les parties avant 17A et arrière 17C du corps 17.

La plaque 17B s'étend transversalement dans un plan d'orientation radiale perpendiculaire à l'axe X-X.

La pièce centrale 17B formant plaque de fixation est réalisée par moulage en matériau plastique et elle peut comporter par exemple des oreilles 46 de fixation comportant des trous 47 pour le passage d'organes de fixation, usuellement de vis, du corps de cylindre 17, et donc du cylindre émetteur 10, sur une partie fixe du véhicule automobile.

On a aussi représenté à la figure 1 un tube 49 solidaire de la pièce centrale 17B du corps de cylindre 17.

Le tube 49 permet de raccorder l'intérieur du corps de cylindre 17 à un réservoir principal de réalimentation (non représenté) qui est monté à l'extérieur du cylindre émetteur 10, les chambres hydrauliques des cylindres émetteur et récepteur étant remplies d'un fluide hydraulique tel que par exemple de l'huile.

Le réservoir est partiellement rempli par le fluide hydraulique et il est raccordé par une conduite, non représentée sur les figures, au tube 49, ce dernier débouchant dans un canal 51, d'orientation inclinée par rapport à l'axe X-X, qui traverse la pièce centrale 17B depuis sa face transversale avant 45A pour déboucher vers l'arrière et axialement vers l'intérieur dans l'alésage central étagé 22B formé dans la partie centrale massive et de forme générale cylindrique annulaire 54 de la pièce centrale 17B.

En référence aux figures 1 à 3, on décrira maintenant les moyens, selon l'invention, de guidage en coulissement du piston 21 dans le corps de cylindre 17.

Conformément aux enseignements de l'invention, les moyens de guidage en coulissement axial du piston 21,42 dans l'alésage interne 22 de du corps de cylindre 17, comportent deux tronçons de guidage 60 et 62, respectivement avant et arrière, dont chacun est un tronçon de cylindre d'axe général X-X et qui appartiennent tous les deux à la pièce centrale 17B du corps de cylindre 17.

Plus précisément, le tronçon de guidage avant 60 appartient à une bague de guidage 64 rapportée dans la pièce centrale 17B, tandis que le tronçon de guidage arrière 62 est formé directement dans la pièce centrale qui est ici, à titre d'exemple, réalisée par moulage de précision en matériau plastique.

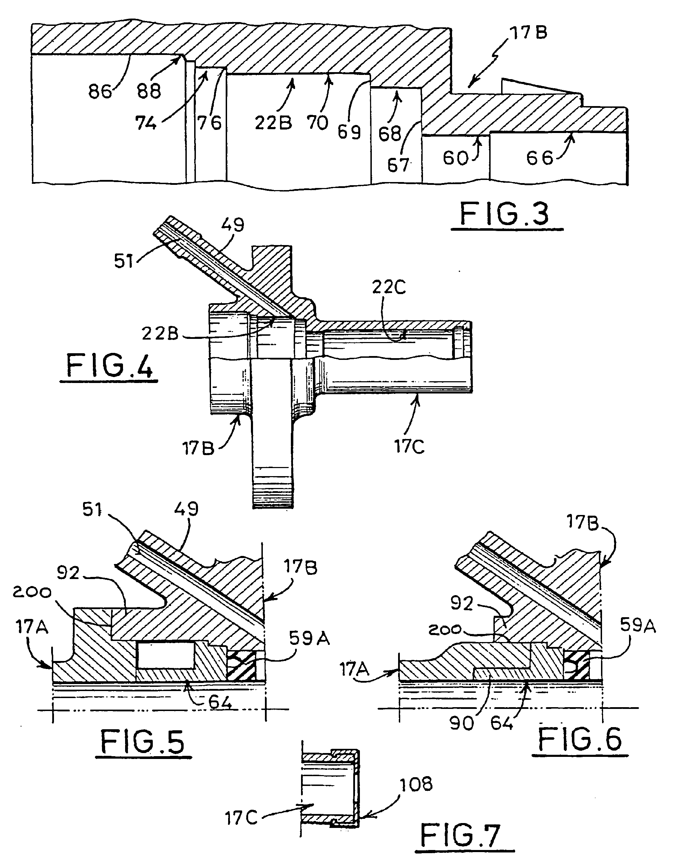

Comme on peut le voir en détail à la figure 3, la portion d'alésage central 22B formée dans la partie massive 54 de la pièce centrale est une portion d'alésage étagé.

Plus précisément, d'arrière en avant c'est-à-dire de la droite vers la gauche en considérant la figure 3, l'alésage étagé central 22B comporte un tronçon arrière 60 de plus petit diamètre qui est une portée cylindrique convexe de précision qui constitue le tronçon arrière de guidage et qui se prolonge axialement vers l'arrière par un dégagement 66 de diamètre légèrement supérieur dont la précision dimensionnelle est sans importance du point de vue fonctionnel.

Vers l'avant, au-delà du tronçon arrière de guidage 60, l'alésage étagé 22B comporte successivement un tronçon 68 de plus grand diamètre, sans précision dimensionnelle, qui constitue le logement pour un premier joint d'étanchéité arrière 59C, puis un autre tronçon 70 de plus grand diamètre, sans précision dimensionnelle, qui constitue le logement pour un second joint d'étanchéité avant 59A avec interposition d'une entretoise axiale 75 qui est par exemple de section rectangulaire et peut être évidée, puis par un tronçon de plus grand diamètre 74 qui constitue une portée cylindrique concave pour le centrage de la bague de guidage 64 et qui est délimité axialement vers l'avant par rapport au tronçon précédent 70 par un épaulement transversal 76 qui s'étend dans un plan radial et qui est orienté axialement vers l'avant.

Les tronçons 60 et 68 sont délimités par un épaulement radial 67 orienté vers l'avant tandis que les tronçons 68 et 70 sont délimités par un épaulement 69.

De manière complémentaire, la partie d'extrémité axiale arrière massive 78 de la bague de guidage 64 est délimitée radialement vers l'extérieur par une surface de portée cylindrique convexe 80 de diamètre complémentaire du diamètre intérieur du tronçon 74, et axialement par une face transversale d'extrémité arrière 82 qui vient en appui axial vers l'arrière contre l'épaulement 76.

Pour sa fixation en position montée, par exemple par soudage, dans l'alésage étagé 22B de la pièce centrale 17B, la partie massive 78 de la bague de guidage 64 comporte aussi une collerette radiale extérieure 84 qui est reçue dans un dernier tronçon, d'extrémité avant, de plus grand diamètre 86 de l'alésage étagé 22B qui est relié au tronçon précédent 74 par une zone de raccordement 88 conformée de manière particulière pour faciliter les opérations de fixation par soudage (voir figure 3).

Au-delà de sa partie massive arrière 78, la bague de guidage 64 se prolonge axialement par une douille 90 de grande longueur axiale de manière à délimiter un tronçon arrière de guidage 62 de grande longueur.

En position montée et fixée, par exemple soudage, la bague de guidage 64, qui est réalisée par moulage de précision en matériau plastique, est parfaitement positionnée axialement et est centrée dans la pièce centrale 17B de façon à assurer une parfaite coaxialité et une parfaite concentricité des deux tronçons arrière 60 et avant 62 de guidage du piston 21.

En outre, le montage et la fixation de la bague de guidage 64 dans l'alésage étagé 88B de la pièce centrale 17B, en emprisonnant axialement les deux joints d'étanchéité avant 59 A et arrière 59C entre lesquels est interposée l'entretoise 75, assure la réalisation d'une boîte à joints dans la partie centrale massive 54 de la pièce centrale 17B.

Chaque joint dynamique d'étanchéité avant 59A et arrière 59C est ici une coupelle d'étanchéité à lèvre qui est ainsi montée dans un logement complémentaire 68, 70 formé dans la partie centrale massive 54 de la pièce centrale 17B et qui est ouvert radialement vers l'intérieur de manière que chaque joint dynamique 59A, 59C puisse coopérer par sa lèvre radialement intérieure avec la surface cylindrique externe de la chemise de piston 42. A titre de variante, chaque joint dynamique peut être un joint composite d'étanchéité.

La pièce centrale 17B fait ainsi fonction, par sa partie centrale massive 54, de boîte à joints qui porte ici deux joints dynamiques d'étanchéité, un seul joint dynamique d'étanchéité pouvant être prévu sans sortir du cadre de l'invention.

Conformément aux enseignements de l'invention, seules la pièce centrale 17B et la bague de guidage 64 doivent présenter une grande précision de fabrication, notamment en vue de disposer de deux tronçons de guidage 60 et 62 coaxiaux et concentriques, tandis que les pièces avant 17A et arrière 17C peuvent être réalisées de manière moins précise dans la mesure notamment où leurs portions d'alésage interne 22A et 22C n'assurent pas de fonction de guidage en coulissement axial du piston 21,42.

Le montage et la fixation de la bague de guidage 64 dans la pièce centrale 17B ne nécessitent aucune mesure particulière d'étanchéité dans la mesure où l'étanchéité axiale vers l'arrière est assurée par les deux joints d'étanchéité et dans la mesure où l'étanchéité axiale vers l'avant est assurée entre la pièce avant 17A et la pièce centrale 17B par l'intermédiaire des moyens de fixation étanche entre ces deux composants.

Dans le mode de réalisation représenté aux figures 1 et 2, la partie d'extrémité axiale avant 92 de la partie massive 54 est réalisée sous la forme d'une douille qui est reçue axialement dans un logement cylindrique annulaire complémentaire 94 formé dans la partie d'extrémité axiale arrière 96 de la pièce avant 17A, la fixation étanche entre les deux pièces 17A et 17B étant assurée par soudage des parties 92 et 94 dans la zone 200, ici de préférence par frottement par rotation, par vibrations ou par soudure laser.

Comme on peut le voir aux figures 1 et 2, la pièce arrière 17C est de conception particulièrement simple et ses moyens de fixation sur la partie d'extrémité axiale arrière 98 de la pièce centrale 17B ne nécessitent pas de moyens d'étanchéité particuliers, car la zone de fixation de ces deux pièces est située en aval de la boîte à joints, en dehors de la chambre 20.

Dans l'exemple réalisation illustré aux figures 1 et 2, la pièce arrière 17C est ainsi fixée par emboîtement élastique 100 sur la partie d'extrémité axiale arrière 98 par l'intermédiaire de crans 102 et d'ergots 104.

La conception selon l'invention est aussi particulièrement avantageuse en ce qu'elle permet l'assemblage des différents composants par empilage axial, notamment selon une direction verticale d'assemblage correspondant à l'axe X-X, en commençant par la pièce avant 17A, puis en mettant en place successivement le ressort 29, la pièce centrale 17B préalablement équipée de la bague de guidage 64 pour constituer la boîte à joints et les moyens de guidage du piston, puis la pièce arrière 17C, et enfin la tige de piston 33 avec sa tête 40, l'assemblage se terminant par la mise en place de l'anneau élastique de butée 106 contre lequel vient prendre appui la face transversale annulaire d'extrémité arrière de l'ensemble formant piston 21,42.

Dans la variante de réalisation illustrée à la figure 4, on voit que la pièce centrale 17B et la pièce arrière 17C sont réalisées venues de matière par moulage en matière plastique en une seule pièce, la conception et la conformation générale des parties de gauche et de droite de la pièce unique représentée à la figure 4 étant par ailleurs identiques à celles décrites précédemment en référence aux figures 1 à 3.

Dans la variante de réalisation illustrée à la figure 5, qui est plus particulièrement adaptée à la réalisation d'une fixation étanche entre les pièces avant 17A et centrale 17B par vibrations, on voit que la douille 92 est reçue dans un logement complémentaire 94 qui est ouvert radialement vers l'extérieur tandis que la conception de la bague de guidage 64 est inchangée.

Dans la variante de réalisation illustrée à la figure 6, qui comme dans le cas illustré aux figures 1 et 2 est plus particulièrement adaptée à la réalisation d'une fixation étanche entre les pièces avant 17A et centrale 17B par soudage par frottement de rotation, on voit que c'est la partie d'extrémité axiale arrière 94 de la pièce avant 17A qui est conformée en une douille qui est reçue dans un logement complémentaire délimité d'une part par la virole 90 de la bague de guidage 64 et, d'autre part, par la partie d'extrémité axiale avant 92 de la pièce centrale 17B.

Enfin, on a représenté à la figure 7 une variante de réalisation des moyens de butée axiale vers l'arrière pour le piston 21,42 qui sont constitués ici par un bouchon externe 108 qui est emboîté élastiquement autour du tronçon d'extrémité libre axiale arrière de la pièce arrière 17C.

La chemise de piston 42 présente au moins un trou ou une encoche de passage pour assurer une communication entre l'intérieur et l'extérieur de la chemise de piston 42.

Le trou est implanté en fonction du mouvement axial du piston 21 avec sa chemise de piston 42 de part et d'autre de la lèvre du joint dynamique d'étanchéité avant 59A. Lorsque l'embrayage est engagé, le trou assure une communication entre la chambre hydraulique de commande 20 et le réservoir principal externe. Lors de la manoeuvre de l'embrayage, la communication est interrompue car le trou est déplacé par rapport au joint 59A, vers l'avant en considérant la figure 2.

Bien entendu, plusieurs trous peuvent être prévus dans un même plan transversal pour assurer un passage de fluide plus important et éviter d'avoir recours à une orientation angulaire lors du montage, les trous 62 étant répartis angulairement de manière régulière.

La communication entre la chambre hydraulique 20 et le réservoir se fait à travers les trous et l'espace annulaire axial délimité entre la surface cylindrique externe de la chemise de piston 42 et la surface cylindrique interne l'alésage interne 22A de la partie centrale massive 54 de la pièce centrale 17B.

Selon un aspect non représenté sur les figures, et afin d'éviter que du fluide ne s'échappe vers l'extérieur, il peut être prévu un soufflet d'étanchéité intervenant entre le corps de cylindre 17 et la tige de piston 33, par exemple entre la pièce centrale 17B et la tige de piston.

La présence de deux joints dynamiques d'étanchéité 59A, 59C peut toutefois permettre d'éviter d'avoir recours à un soufflet d'étanchéité complémentaire.

Dans ce cas, il peut être prévu, si nécessaire, un capot complémentaire (non représenté) de protection de la pièce arrière 17C qui est par exemple fixé autour de la douille arrière 27C de la pièce centrale 17B et qui entoure la pièce arrière 17C et est traversé par la tige de piston 33.

Bien entendu, un tel capot de protection peut entourer un soufflet d'étanchéité.

## Revendications

1. Dispositif (10) de commande hydraulique d'un embrayage, notamment de véhicule automobile, comprenant au moins un cylindre, comportant un corps de cylindre (17) qui comporte un fond avant (24) et qui est ouvert à l'arrière, dans un alésage interne (22) duquel un piston (21, 42) est monté coulissant axialement, avec interposition d'au moins un joint dynamique d'étanchéité (59A, 59C) porté par le corps du cylindre (17, 17B) pour coopérer avec la périphérie externe (42) du piston (21), du type dans lequel le piston (21) présente une face avant (31) délimitant une chambre hydraulique (20) et une face arrière (32) coopérant avec une tige de piston (33), et du type dans lequel le corps de cylindre (17) comporte, agencées axialement consécutivement d'avant en arrière, au moins une pièce avant borgne (17A), qui comporte ledit fond (24), et une pièce centrale (17B), qui porte ledit au moins un joint d'étanchéité, qui sont fixées entre elles de manière étanche, et du type dans lequel ledit alésage interne comporte deux tronçons avant et arrière, sensiblement coaxiaux et concentriques, de guidage en coulissement axial du piston (21, 42),
**caractérisé en ce que** les deux tronçons avant (62) et arrière (60) de guidage en coulissement du piston (21, 42) appartiennent à la pièce centrale (17B, 64) du corps de cylindre.

2. Dispositif de commande selon la revendication 1, **caractérisé en ce que** le tronçon arrière de guidage (60) est formé directement dans la pièce centrale (17B) du corps de cylindre (17), et **en ce que** le tronçon avant de guidage (62) est formé dans une bague centrale interne (64) de guidage rapportée dans la pièce centrale (17B).

3. Dispositif de commande selon la revendication précédente, **caractérisé en ce que** la pièce centrale (17B) et la bague de guidage (64) comportent des moyens de positionnement et de centrage (74, 76, 80, 82) de la bague (64) par rapport à la pièce centrale (17B, 22B) pour assurer la coaxialité et la concentricité des deux tronçons avant (62) et arrière (60) de guidage.

4. Dispositif de commande selon la revendication précédente, **caractérisé en ce que** les moyens de positionnement et de centrage de la bague (34) par rapport à la pièce centrale (17B) comportent une portée cylindrique de centrage (80) et une face transversale d'orientation radiale (64) de positionnement axial appartenant à la bague de centrage (64) et qui coopèrent avec une portée cylindrique complémentaire (74) de centrage et une face transversale (76) d'orientation radiale de positionnement axial appartenant à la pièce centrale (17B, 22B).

5. Dispositif de commande selon l'une des revendications 3 ou 4, **caractérisé en ce que** la bague de centrage (64) est rapportée dans la pièce centrale (17B, 22B) par introduction axiale d'avant en arrière.

6. Dispositif de selon la revendication 5 prises en combinaison avec la revendication 4, **caractérisé en ce que** la portée cylindrique (80) de centrage de la bague de centrage (64) est une portée convexe, et **en ce que** la face transversale d'orientation radiale de positionnement axial appartenant à la bague de centrage est orientée axialement vers l'arrière.

7. Dispositif de commande selon la revendication précédente, **caractérisé en ce que** la pièce centrale (17B) comporte un alésage interne étagé (22B) qui comprend au moins un tronçon arrière (60) de plus petit diamètre constituant ledit tronçon arrière de guidage en coulissement du piston, et au moins un tronçon avant (74) dont la surface interne constitue la portée cylindrique concave de centrage appartenant à la pièce centrale (17B, 22B).

8. Dispositif de selon l'une quelconque des revendications 4 à 7, **caractérisé en ce que** ledit au moins un joint d'étanchéité (59A, 59C) est interposé axialement entre une face transversale d'orientation radiale (67) appartenant à la pièce centrale et une face transversale, d'orientation radiale, d'extrémité arrière (82) de la bague de centrage (64).

9. Dispositif de commande selon la revendication précédente prise en combinaison avec la revendication 7, **caractérisé en ce que** ledit au moins un joint d'étanchéité (59C) est monté dans un tronçon intermédiaire (68) de l'alésage étagé (22B) qui est délimité axialement par rapport audit tronçon arrière de plus petit diamètre (60) par un épaulement qui constitue ladite face transversale d'orientation radiale appartenant à la pièce centrale (17B, 22B).

10. Dispositif de commande selon l'une des revendications 8 ou 9, **caractérisé en ce qu'**il comporte deux joints d'étanchéité avant (59A) et arrière (59C) qui sont interposés axialement entre ladite face transversale arrière d'orientation radiale (67) appartenant à la pièce centrale (17B, 22B) et ladite face transversale d'extrémité avant (82) de la bague de guidage (64) avec interposition d'une entretoise (75) entre les deux joints d'étanchéité.

11. Dispositif de commande selon l'une quelconque des revendications précédentes, **caractérisé en ce que** le corps de cylindre (17) comporte une pièce arrière (17C), ouverte axialement vers l'arrière, qui est fixée à l'arrière de la pièce centrale (17B).

12. Dispositif de commande selon la revendication précédente, **caractérisé en ce que** la pièce arrière (17C) est réalisée venue de matière en une seule pièce avec la pièce centrale (17B).

13. Dispositif de commande selon la revendication 11, **caractérisé en ce que** la pièce arrière (17C) est fixée sur la partie arrière (98) de la pièce centrale (17B) par emboîtement élastique (102, 104).

14. Dispositif de commande selon l'une quelconque des revendications précédentes, **caractérisé en ce que** la pièce centrale (17B) est réalisée par moulage en matière plastique.

15. Dispositif de commande selon l'une quelconque des revendications précédentes, **caractérisé en ce que** la bague de guidage (64) est réalisée par moulage en matière plastique.

16. Dispositif selon l'une quelconque des revendications précédentes, **caractérisé en ce que** les pièces avant (17A) et centrale (17B) sont fixées entre elles de manière étanche par soudage avec apport indirect de chaleur.

17. Dispositif de commande selon l'une quelconque des revendications précédentes, **caractérisé en ce que** la bague de centrage (64) et la pièce centrale (17B) sont fixées entre elles par soudage avec apport indirect de chaleur.

18. Dispositif de commande selon l'une quelconque des revendications précédentes, **caractérisé en ce que** la pièce centrale (17B) du corps de cylindre (17) est conformée en une plaque transversale de fixation du dispositif de commande (10).

19. Dispositif de commande selon l'une quelconque des revendications précédentes, **caractérisé en ce que** l'extrémité arrière du corps de cylindre (17) comporte au moins une butée (106, 108) destinée à coopérer avec une extrémité arrière du piston pour limiter le déplacement axial du piston (21) vers l'arrière.

20. Dispositif de commande selon l'une quelconque des revendications précédentes, **caractérisé en ce que** le piston (21) comporte une chemise périphérique de piston (42) en métal qui est solidaire axialement du piston et qui coulisse axialement dans l'alésage interne du corps de cylindre (17).

## Claims

1. A hydraulic control device (10) for a clutch, in particular for a motor vehicle, comprising at least one cylinder which includes a cylinder body (17) having a base portion (24) at the front and being open to the rear, the said body having an internal bore (22) in which a piston (21, 44) is mounted for axial sliding movement, with at least one dynamic sealing element (59A, 59C) carried by the cylinder body (17, 17B) being interposed for cooperation with the outer periphery (42) of the piston (21), of the type in which the piston (21) has a front face (31) delimiting a hydraulic chamber (20) and a rear face (32) which cooperates with a piston rod (33), of the type in which the cylinder body (17) comprises, arranged in an axial succession considered from front to rear, at least one blind front part (17A) which includes the said base portion (24), and a central part (17B) which carries the said at least one sealing element, the said front and central parts being fixed sealingly together, and of the type in which the said internal bore consists of two substantially coaxial and concentric guide portions, namely a front portion and a rear portion, for guiding the piston (21, 42) in its axial sliding movement, **characterised in that** the front guide portion (62) and rear guide portion (60) for guiding the sliding movement of the piston (21, 42) are part of the central part (17B, 64) of the cylinder body.

2. A control device according to Claim 1, **characterised in that** the rear guide portion (60) is formed directly in the central part (17B) of the cylinder body (17), and **in that** the front guide portion (62) is formed in a central internal guide sleeve (64) fitted inside the central part (17B).

3. A control device according to Claim 2, **characterised in that** the central part (17B) and the guide sleeve (64) include means (74, 76, 80, 82) for positioning and centring the slaave (64) with respect to the central part (17B, 22B), whereby to ensure that the front guide portion (62) and rear guide portion (60) are coaxial and concentric with each other.

4. A control device according to Claim 3, **characterised in that** the means for positioning and centring the sleeve (64) with respect to the central part (17B) comprise a cylindrical centring surface (80) and a radially oriented, transverse axial positioning face (72) defined on the centring sleeve (64) and cooperating with a complementary cylindrical centring surface (74) and a radially oriented axial positioning surface which are included in the central part (17B, 22B).

5. A control device according to Claim 3 or Claim 4, **characterised in that** the centring sleeve (64) is fitted into the central part (17B, 22B) by being introduced axially in a rearward direction.

6. A device according to Claim 5 taken in combination with Claim 4, **characterised in that** the cylindrical centring surface (80) of the centring sleeve (64) is a convex surface, and **in that** the radially oriented transverse axial positioning face of the centring sleeve is oriented axially towards the rear.

7. A control device according to Claim 6, **characterised in that** the central part (17B) has a stepped internal bore (22B) which includes at least one rear portion (60) of reduced diameter that constitutes the said rear guide portion for guiding the sliding movement of the piston, together with at least one front portion (74), the internal surface of which constitutes the concave cylindrical centring surface of the central part (17B, 22B).

8. A device according to any one of Claims 4 to 7, **characterised in that** the said at least one sealing element (59A, 59C) is interposed axially between the radially oriented transverse face (67) of the central part and a radially oriented transverse rear end face (82) of the centring sleeve (64).

9. A control device according to Claim 8 taken in combination with Claim 7, **characterised in that** the said at least one sealing element (59C) is mounted in an intermediate portion (68) of the stepped bore (22B) which is delimited, axially with respect to the said rear portion of reduced diameter (60), by a shoulder which constitutes the said radially oriented transverse face of the central part (17B, 22B).

10. A control device according to Claim 8 or Claim 9, **characterised in that** it has two sealing elements, namely a front sealing element (59A) and a rear sealing element (59C), which are interposed axially between the said radially oriented transverse rear face (67) of the central part (17B, 22B) and the said transverse front end face (82) of the guide sleeve (64), with a spacer (75) being interposed between the two sealing elements.

11. A control device according to any one of the preceding Claims, **characterised in that** the cylinder body (17) includes a rear part (17C), which is open axially towards the rear and which is fixed to the rear of the central part (17B).

12. A control device according to Claim 11, **characterised in that** the rear pert (17C) is formed integrally and in one piece with the central part (17B).

13. A control device according to Claim 11, **characterised in that** the rear part (17C) is fixed on the rear portion (98) of the central part (17B) by elastic telescoping engagement (102, 104) therewith.

14. A control device according to any one of the preceding Claims, **characterised in that** the central part (17B) is moulded in plastics material.

15. A control device according to any one of the preceding Claims, **characterised in that** the guide sleeve (64) is moulded in plastics material.

16. A control device according to any one of the preceding Claims, **characterised in that** the front part (17A) and the central part (17B) are fixed sealingly together by welding with indirect heating.

17. A control device according to any one of the preceding Claims, **characterised in that** the centring sleeve (64) and the central part (17B) are fixed together by welding with indirect heating.

18. A control device according to any one of the preceding Claims, **characterised in that** the central part (17B) of the cylinder body (17) is configured as a transverse plate for fastening the control device (10).

19. A control device according to any one of the preceding Claims, **characterised in that** the rear end of the cylinder body (17) includes at least one end stop member (106, 108) arranged to cooperate with a rear end of the piston whereby to limit the rearward axial displacement of the piston (21).

20. A control device according to any one of the preceding Claims, **characterised in that** the piston (21) includes a peripheral piston jacket (42) of metal, which is fixed axially on the piston and which slides axially in the internal bore of the cylinder body (17).

## Patentansprüche

1. Vorrichtung (10) zur hydraulischen Betätigung einer Kupplung, insbesondere für Kraftfahrzeuge, mit wenigstens einem Zylinder mit einem Zylinderkörper (17), der einen vorderen Boden (24) umfasst und der nach hinten offen ist, in dessen Innenbohrung (22) ein Kolben (21, 42) axial verschiebbar gelagert ist, unter Einfügung wenigstens einer Bewegungsdichtung (59A, 59C), die am Zylinderkörper (17, 17B) angebracht ist, um mit dem äußeren Umfang (42) des Kolbens (21) zusammenzuwirken, wobei der Kolben (21) eine vorderseitige Fläche (31), die eine Hydraulikkammer (20) begrenzt, und eine rückseitige Fläche (32) aufweist, die mit einer Kolbenstange (33) zusammenwirkt, wobei der Zylinderkörper (17), von vorn nach hinten axial hintereinander angeordnet, wenigstens ein einseitig geschlossenes vorderes Element (17A), das den besagten Boden (24) enthält, und ein mittleres Element (17B) umfasst, die dicht aneinander befestigt sind, und wobei die besagte Innenbohrung zwei, ein vorderes und ein hinteres, in etwa koaxiale und konzentrische Teilstücke zur Führung des Kolbens (21, 42) bei seiner axialen Verschiebung umfasst,
**dadurch gekennzeichnet, dass** die vorderen (62) und hinteren (60) Teilstücke zur Führung des Kolbens (21, 42) bei seiner axialen Verschiebung zum mittleren Element (17B, 64) des Zylinderkörpers gehören.

2. Betätigungsvorrichtung nach Anspruch 1, **dadurch gekennzeichnet, dass** das hintere Führungsteilstück (60) direkt im mittleren Element (17B) des Zylinderkörpers (17) ausgebildet ist und dass das vordere Führungsteilstück (62) in einer im mittleren Element (17B) angebrachten inneren mittigen Führungsbuchse (64) ausgebildet ist.

3. Betätigungsvorrichtung nach dem vorangehenden Anspruch, **dadurch gekennzeichnet, dass** das mittlere Element (17B) und die Führungsbuchse (64) Mittel zur Positionierung und Zentrierung (74, 76, 80, 82) der Buchse (64) im Verhältnis zum mittleren Element (17B, 22B) umfassen, um die Koaxialität und die Konzentrizität der zwei vorderen (62) und hinteren (60) Führungsteilstücke sicherzustellen.

4. Betätigungsvorrichtung nach dem vorangehenden Anspruch, **dadurch gekennzeichnet, dass** die Mittel zur Positionierung und Zentrierung der Buchse (34) im Verhältnis zum mittleren Element (17B) eine zylindrische Zentriersitzfläche (80) und eine radial ausgerichtete Querfläche (64) zur axialen Positionierung umfassen, die zur Zentrierbuchse (64) gehören und die mit einer formschlüssigen zylindrischen Zentriersitzfläche (74) und einer radial ausgerichteten Querfläche (76) zur axialen Positionierung zusammenwirken, die zum mittleren Element (17B, 22B) gehört.

5. Betätigungsvorrichtung nach einem der Ansprüche 3 oder 4, **dadurch gekennzeichnet, dass** die Zentrierbuchse (64) im mittleren Element (17B, 22B) durch axiales Einsetzen von vorn nach hinten angebracht ist.

6. Betätigungsvorrichtung nach Anspruch 5 in Kombination mit Anspruch 4, **dadurch gekennzeichnet, dass** die zylindrische Zentriersitzfläche (80) der Zentrierbuchse (64) eine konvexe Sitzfläche ist und dass die radial ausgerichtete Querfläche zur axialen Positionierung, die zur Zentrierbuchse gehört, axial nach hinten ausgerichtet ist.

7. Betätigungsvorrichtung nach dem vorangehenden Anspruch, **dadurch gekennzeichnet, dass** das mittlere Element (17B) eine abgestufte Innenbohrung (22B) umfasst, die wenigstens ein hinteres Teilstück (60) mit kleinerem Durchmesser, welches das besagte hintere Teilstück zur Führung des Kolbens bei seiner axialen Verschiebung bildet, und wenigstens ein vorderes Teilstück (74) enthält, dessen Innenfläche die konkave zylindrische Zentriersitzfläche bildet, die zum mittleren Element (17B, 22B) gehört.

8. Betätigungsvorrichtung nach einem der Ansprüche 4 bis 7, **dadurch gekennzeichnet, dass** die besagte wenigstens eine Dichtung (59A, 59C) axial zwischen einer zum mittleren Element gehörenden, radial ausgerichteten Querfläche (67) und einer radial ausgerichteten hinteren Querabschlussfläche (82) der Zentrierbuchse (64) eingefügt ist.

9. Betätigungsvorrichtung nach dem vorangehenden Anspruch in Kombination mit Anspruch 7, **dadurch gekennzeichnet, dass** die besagte wenigstens eine Dichtung (59C) in einem Zwischenteilstück (68) der abgestuften Bohrung (22B) angebracht ist, das axial im Verhältnis zum hinteren Teilstück mit kleinerem Durchmesser (60) durch eine Schulter begrenzt wird, welche die besagte zum mittleren Element (17B, 22B) gehörende, radial ausgerichtete Querfläche bildet.

10. Betätigungsvorrichtung nach einem der Ansprüche 8 oder 9, **dadurch gekennzeichnet, dass** sie zwei Dichtungen, eine vordere (59A) und eine hintere (59C), umfasst, die axial zwischen der besagten zum mittleren Element (17B, 22B) gehörenden, radial ausgerichteten Querfläche (67) und der besagten vorderen Abschlussquerfläche (82) der Führungsbuchse (64) unter Einfügung eines Abstandsstücks (75) zwischen den beiden Dichtungen eingefügt sind.

11. Betätigungsvorrichtung nach einem der vorangehenden Ansprüche, **dadurch gekennzeichnet, dass** der Zylinderkörper (17) ein axial nach hinten offenes hinteres Element (17C) umfasst, das an der Rückseite des mittleren Elements (17B) befestigt ist.

12. Betätigungsvorrichtung nach dem vorangehenden Anspruch, **dadurch gekennzeichnet, dass** das hintere Element (17C) einstückig mit dem mittleren Element (17B) ausgeführt ist.

13. Betätigungsvorrichtung nach Anspruch 11', **dadurch gekennzeichnet, dass** das hintere Element (17C) durch elastische Einpassung (102, 104) am hinteren Teil (98) des mittleren Elements (17B) befestigt ist.

14. Betätigungsvorrichtung nach einem der vorangehenden Ansprüche, **dadurch gekennzeichnet, dass** das mittlere Element (17B) als Formteil aus Kunststoff ausgeführt ist.

15. Betätigungsvorrichtung nach einem der vorangehenden Ansprüche, **dadurch gekennzeichnet, dass** die Führungsbuchse (64) als Formteil aus Kunststoff ausgeführt ist.

16. Betätigungsvorrichtung nach einem der vorangehenden Ansprüche, **dadurch gekennzeichnet, dass** die vorderen (17A) und mittleren (17B) Elemente durch Schweißen mit indirekter Wärmezufuhr dicht aneinander befestigt sind.

17. Betätigungsvorrichtung nach einem der vorangehenden Ansprüche, **dadurch gekennzeichnet, dass** die Zentrierbuchse (64) und das mittlere Element (17B) durch Schweißen mit indirekter Wärmezufuhr aneinander befestigt sind.

18. Betätigungsvorrichtung nach einem der vorangehenden Ansprüche, **dadurch gekennzeichnet, dass** das mittlere Element (17B) des Zylinderkörpers (17) in Form einer quer angeordneten Befestigungsplatte zur Befestigung der Betätigungsvorrichtung (10) gestaltet ist.

19. Betätigungsvorrichtung nach einem der vorangehenden Ansprüche, **dadurch gekennzeichnet, dass** das hintere Ende des Zylinderkörpers (17) wenigstens einen Anschlag (106, 108) umfasst, der für das Zusammenwirken mit einem hinteren Ende des Kolbens bestimmt ist, um die axiale Verschiebung des Kolbens (21) nach hinten zu begrenzen.

20. Betätigungsvorrichtung nach einem der vorangehenden Ansprüche, **dadurch gekennzeichnet, dass** der Kolben (21) eine aus Metall ausgeführte umfangsmäßige Kolbenbuchse (42) umfasst, die axial fest mit dem Kolben verbunden ist und die in der Innenbohrung des Zylinderkörpers (17) axial gleitend verschiebbar geführt ist.
